# EUROPÄISCHE PATENTSCHRIFT

(11) **EP 2 598 013 B1**
(45) Veröffentlichungstag und Bekanntmachung des Hinweises auf die Patenterteilung: **17.05.2017**
(21) Anmeldenummer: 11734132.1
(22) Anmeldetag: 21.07.2011
(51) Int. Cl.: G05B 1/01, A47L 11/40, G07C 9/00, E05B 35/00

(54) **REINIGUNGSVORRICHTUNG**
CLEANING DEVICE
DISPOSITIF DE NETTOYAGE

(30) Priorität: 26.07.2010 DE 102010038420
(43) Veröffentlichungstag der Anmeldung: 05.06.2013
(73) Patentinhaber: Alfred Kärcher GmbH & Co. KG, 71364 Winnenden (DE)
(72) Erfinder: TROFF, Gilles, 70437 Stuttgart (DE); STADELMANN, Frank, 71364 Winnenden (DE); NOLLER, Bernd, 76669 Bad Schönborn (DE); SCHÄFER, Rainer, 71397 Leutenbach (DE)
(74) Vertreter: Hoeger, Stellrecht & Partner Patentanwälte mbB
(86) Internationale Anmeldenummer: PCT/EP2011/062568
(87) Internationale Veröffentlichungsnummer: WO 2012/016847

(56) Entgegenhaltungen:
- EP-A1- 0 559 160
- EP-A2- 1 593 334
- WO-A2-01/20923
- WO-A2-03/038764
- DE-A1- 10 046 699
- DE-A1- 19 753 086
- DE-A1-102004 006 947
- DE-A1-102005 042 830
- DE-A1-102009 038 304
- DE-B- 1 096 242
- DE-U1- 29 720 720
- GB-A- 2 076 181
- GB-A- 2 352 057
- GB-A- 2 353 180
- US-A- 3 142 771
- US-A- 4 077 242
- US-A- 4 821 107
- US-A- 5 775 148

## Beschreibung

Die Erfindung betrifft eine Reinigungsvorrichtung, zum Zugriff auf welche eine auf einem Berechtigungsträger hinterlegte Zugriffsberechtigung erforderlich ist, umfassend zwei oder mehr Berechtigungsträger mit darauf hinterlegten Zugriffsberechtigungen, die mit unterschiedlichen Berechtigungsprofilen verknüpft sind, sowie eine Erfassungseinheit zum Erfassen der Zugriffsberechtigung eines Berechtigungsträgers, wobei einer Bedienperson von der Reinigungsvorrichtung ein vom mit der Zugriffsberechtigung verknüpften Berechtigungsprofil abhängiger Funktionsumfang bereitstellbar ist.

Bei einer derartigen Reinigungsvorrichtung erfolgt die Zugriffskontrolle anhand eines Berechtigungsträgers, beispielsweise eines Schlüssels oder einer Berechtigungskarte, auf dem bzw. der eine Zugriffsberechtigung hinterlegt ist. Zweck der Zugriffskontrolle ist es sicherzustellen, dass nur ein autorisierter und eingewiesener Benutzer die Reinigungsvorrichtung bedient. Dies dient dazu, eine Fehlbedienung und ein damit verbundenes Schadensrisiko nicht nur für die Reinigungsvorrichtung, sondern auch für die Bedienperson oder Dritte zu vermeiden. Beispiele für eine Zugriffsberechtigung erfordernde Reinigungsvorrichtungen sind Scheuersaugmaschinen, fahrbare Kehrmaschinen sowie mittels eines Reinigungsstrahls arbeitende Reinigungsvorrichtungen, insbesondere beheizbare Hochdruckreinigungsgeräte oder Partikelstrahlgeräte wie Trockeneisstrahlgeräte.

Die gattungsgemäße Reinigungsvorrichtung umfasst zwei oder mehr Berechtigungsträger unterschiedlichen Berechtigungsprofils, wobei "Berechtigungsprofil des Berechtigungsträgers" vorliegend das mit der auf dem Berechtigungsträger hinterlegten Zugriffsberechtigung verknüpfte Berechtigungsprofil ist. Der Funktionsumfang der Reinigungsvorrichtung bestimmt sich anhand des Berechtigungsprofils. So kann beispielsweise vorgesehen sein, dass ein für "normal erfahrene" Bedienpersonen vorgesehener Berechtigungsträger Zugriff auf die gängigsten Funktionen der Reinigungsvorrichtung gewährt. Erfahrenere Bedienpersonen können mit Berechtigungsträgern ausgestattet werden, deren Berechtigungsprofil Zugriff auf weitere Funktionen der Reinigungsvorrichtung gewährt. Schließlich können für Wartungspersonal vorgesehene Berechtigungsträger vorhanden sein, durch deren Einsatz der komplette Funktionsumfang der Reinigungsvorrichtung ausgeschöpft werden kann.

Das Berechtigungsprofil eines Berechtigungsträgers kann Bestandteil der Zugriffsberechtigung sein, oder es kann ebenfalls auf dem Berechtigungsträger hinterlegt sein und von der Erfassungseinheit gemeinsam mit der Zugriffsberechtigung erfasst werden. Denkbar ist auch, dass die Erfassungseinheit die Zugriffsberechtigung an eine Steuereinheit der Reinigungsvorrichtung übermittelt, welche anhand einer in einem Speicherglied der Reinigungsvorrichtung hinterlegten Information feststellen kann, welches Berechtigungsprofil mit der übermittelten Zugriffsberechtigung verknüpft ist. Von der Steuereinheit können Funktionseinheiten der Reinigungsvorrichtung, beispielsweise ein Reinigungswerkzeug, eine Schmutzaufnahmeinrichtung, eine Reinigungsmitteldosiereinrichtung etc. dann berechtigungsprofilabhängig angesteuert werden.

In der DE 197 53 086 A1 ist ein Personalisierungsmodul für ein Kraftfahrzeug beschrieben, das sowohl z. B. dessen Türen entriegeln als auch zusätzlich eine individuelle Einstellung oder Anpassung von Fahrzeug-Bedienelementen oder -Subsystemen an einen einzelnen Fahrer bewirken kann. Das Personalisierungsmodul ist bevorzugt in einen Fahrzeugschlüssel, einen Schlüsselanhänger oder in eine Karte integriert. Ein einzelnes, individuell zugeordnetes Personalisierungsmodul kann auf eines oder mehrere Fahrzeuge, speziell Dienst- und Notfallfahrzeuge, einwirken.

Die GB 2 352 057 A beschreibt eine Vorrichtung, die mit Mietmaschinen, beispielsweise einer Mietplattform, verwendet werden kann. Die Vorrichtung kontrolliert selektiv Funktionen der Maschine, die dem Mieter zur Verfügung stehen. Ein Freischaltungsmittel wie beispielsweise eine Smartcard ist mit Informationen programmiert, die sich auf vorbestimmte Kriterien bezieht, beispielsweise die Funktionen der Maschine, die beantragt wurden. Die Maschine umfasst einen Kartenleser zum Lesen der Information von der Karte. Eine Masterkarte oder ein Masterschlüssel aktiviert alle Funktionen der Maschine.

In der GB 2 353 180 A ist eine Sicherheitskarte beschrieben, die einen elektronischen Schlüssel umfasst und mit einer Kontrollvorrichtung beispielsweise eines Fahrzeugs kommuniziert. Der Schlüssel kann einen Identifizierungscode mittels einer Funkverbindung übertragen und kann programmiert sein, mehrere unterschiedliche Maschinen zu bedienen. Eine Maschine kann mittels mehrerer unterschiedlicher Schlüssel bedient werden.

Die WO 03/038764 A2 offenbart eine Sicherheitseinrichtung, die den kontrollierten Zugang oder Zugriff zu gefährdeten Sicherheitsbereichen von berechtigten Personen in einfacher Weise ermöglicht. Die Sicherheitseinrichtung ist mit einem Bussystem ausgestattet, das eine zentrale Steuereinrichtung mit mehreren Aktoren verbindet, die jeweils mindestens einem der Sicherheitsbereiche zugeordnet sind. Mit Hilfe einer Personenidentifikationseinrichtung wird die Zugangsberechtigung überprüft und gesteuert.

Aufgabe der vorliegenden Erfindung ist es, eine Reinigungsvorrichtung der eingangs genannten Art bereitzustellen, deren Bedienung benutzerfreundlicher ist.

Diese Aufgabe wird erfindungsgemäß durch eine Reinigungsvorrichtung mit den Merkmalen von Anspruch 1 gelöst.

Bei der erfindungsgemäßen Reinigungsvorrichtung kann die Bedienperson anhand der von der Kennzeichnungseinrichtung bereitstellbaren Kennzeichnung auf einfache Weise mittels eines Sinnesorgans feststellen, was für eine Art Berechtigungsprofil mit der auf dem Berechtigungsträger hinterlegten Zugriffsberechtigung verknüpft ist. Um das Berechtigungsprofil des Berechtigungsträgers zu ermitteln, ist es insbesondere nicht erforderlich, die Reinigungsvorrichtung in Betrieb zu nehmen, um widrigstenfalls sämtliche Berechtigungsträger dahingehend zu überprüfen, ob sie das von der Bedienperson erwartete Berechtigungsprofil aufweisen. Dies erleichtert der Bedienperson die Bedienung der Reinigungsvorrichtung.

Günstig ist es, wenn die Reinigungsvorrichtung mehrere Berechtigungsträger mit demselben Berechtigungsprofil umfasst und wenn die mehreren Berechtigungsträger identische Kennzeichnungen aufweisen, um die Handhabung der Berechtigungsträger und die Bedienung der Reinigungsvorrichtung zu erleichtern. Insbesondere lässt sich auf diese Weise eine eineindeutige Zuordnung der Kennzeichnung und der Berechtigungsprofile zueinander erzielen.

Vorzugsweise sind die Kennzeichnungen aller Berechtigungsträger anhand desselben Sinnesorgans wahrnehmbar, um Bedienpersonal den Umgang mit den Berechtigungsträgern und damit der Reinigungsvorrichtung zu erleichtern. Die Bedienperson kann sich dadurch schneller daran gewöhnen, dass anhand einer immer durch dasselbe Sinnesorgan wahrnehmbaren Kennzeichnung auf das Berechtigungsprofil geschlossen werden kann.

Von Vorteil ist es, wenn mindestens eine Kennzeichnungseinrichtung eine optische Kennzeichnungseinrichtung mit visuell wahrnehmbarer Kennzeichnung ist, d.h. die von der optischen Kennzeichnungseinrichtung bereitgestellte Kennzeichnung ist mittels des Sehsinns der Bedienperson erfassbar. Eine optische Kennzeichnungseinrichtung, beispielsweise eine Anzeigeeinheit, ermöglicht eine zuverlässige Wahrnehmung der Kennzeichnung. Günstigerweise sind die Kennzeichnungseinrichtungen aller Berechtigungsträger optische Kennzeichnungseinrichtungen.

Bei einer besonders einfach zu handhabenden Ausführungsform der Reinigungsvorrichtung ist die visuell wahrnehmbare Kennzeichnung eine Farbe, beispielsweise eine Grundfarbe wie z.B. gelb oder grün. Möglich ist auch ein bestimmter Farbton eines Farbsystems, beispielsweise ein bestimmter "Pantone"-Farbton. Eine farbliche Kennzeichnung des Berechtigungsträgers, die beispielsweise in der ganzen oder teilweisen Einfärbung desselben vorliegen kann, ist auf besonders benutzerfreundliche Weise wahrnehmbar.

In ähnlicher Weise kann vorgesehen sein, dass die Kennzeichnung eine Farbe umfasst und beispielsweise in einer bestimmten räumlichen Anordnung einer Mehrzahl von Farben vorliegt, etwa einem Farbverlauf.

Vorzugsweise ist mindestens eine Kennzeichnungseinrichtung eine haptische Kennzeichnungseinrichtung mit tastend wahrnehmbarer Kennzeichnung, d.h. die von der haptischen Kennzeichnungseinrichtung bereitgestellte Kennzeichnung ist mittels des Tastsinns der Bedienperson erfassbar. Auch eine derartige Kennzeichnung lässt sich in der Praxis benutzerfreundlich und zuverlässig erfassen. Es kann insbesondere vorgesehen sein, dass die Kennzeichnungseinrichtungen aller Berechtigungsträger haptische Kennzeichnungseinrichtungen mit ertastbaren Kennzeichnungen sind.

Vorteilhafterweise umfasst die tastend wahrnehmbare Kennzeichnung am Berechtigungsträger gebildete Erhebungen und/oder Vertiefungen. Eine derartige Kennzeichnung ist konstruktiv einfach und lässt sich in der Praxis zuverlässig wahrnehmen.

Es kann auch vorgesehen sein, dass eine tastend wahrnehmbare Kennzeichnung sich dadurch auszeichnet, dass der Berechtigungsträger keinerlei Erhebungen und/oder Vertiefungen umfasst und dementsprechend eine glatte Oberflächenbeschaffenheit aufweist.

Über die bereits erwähnten optischen und haptischen Kennzeichnungseinrichtungen hinaus kann vorgesehen sein, dass mindestens je eine Kennzeichnungseinrichtung eine akustische Kennzeichnungseinrichtung mit einer anhand des Hörsinns, eine olfaktorische Kennzeichnungseinrichtung mit einer anhand des Geruchssinns sowie eine gustatorische Kennzeichnungseinrichtung mit einer anhand des Geschmackssinns wahrnehmbaren Kennzeichnung ist. In der Praxis allerdings erweisen sich optische und eine haptische Kennzeichnungseinrichtungen als zuverlässiger, was die Wahrnehmung der jeweiligen Kennzeichnungen angeht.

Die mindestens eine Kennzeichnungseinrichtung ist bevorzugt eine statische Kennzeichnungseinrichtung mit dauerhaft wahrnehmbarer Kennzeichnung. "Dauerhaft wahrnehmbar" bedeutet vorliegend, dass die Kennzeichnung ohne vorherigen Aufruf durch die Bedienperson, beispielsweise Aktivierung des Berechtigungsträgers zur Ausgabe der Kennzeichnung, von der Kennzeichnungseinrichtung bereitgestellt ist. Dies erleichtert der Bedienperson die Handhabung des Berechtigungsträgers und die Wahrnehmung der Kennzeichnung. Besonders bevorzugt sind die Kennzeichnungseinrichtungen aller Berechtigungsträger statische Kennzeichnungseinrichtungen.

Von Vorteil ist es, wenn die Kennzeichnung mindestens eines und bevorzugt aller Berechtigungsträger an einer Oberfläche des Berechtigungsträgers bzw. der Berechtigungsträger angeordnet ist. Dies erlaubt eine konstruktiv einfache sowie eine einfach wahrzunehmende Kennzeichnung des jeweiligen Berechtigungsträgers. Dessen Oberfläche bildet zumindest teilweise einen Kennzeichnungsbereich, an dem die Kennzeichnung angeordnet ist. Beispiele für an der Oberfläche gekennzeichnete Berechtigungsträger sind an der Oberfläche zumindest teilweise eingefärbte und/oder mit Vertiefungen und/oder Erhebungen versehene Berechtigungsträger. Die entsprechende Kennzeichnungseinrichtung eines solchen Berechtigungsträgers ist beispielsweise gebildet durch die Oberfläche sowie mindestens ein sich darauf befindendes kennzeichnendes Element, etwa eine Farbschicht oder eine Profilierung.

Besonders bevorzugt erstreckt sich die Kennzeichnung über die gesamte Oberfläche des Berechtigungsträgers, allenfalls abgesehen von dessen Kanten, Ecken oder dergleichen. Hierbei handelt es sich um eine konstruktiv besonders einfache Art der Kennzeichnung, die zudem besonders zuverlässig durch die Bedienperson wahrnehmbar ist. Beispielsweise ist die gesamte Oberfläche des Berechtigungsträgers eingefärbt, wobei unterschiedliche Berechtigungsprofile aufweisende Berechtigungsträger unterschiedlich eingefärbt sind. In entsprechender Weise kann vorgesehen sein, dass die gesamte Oberfläche eines Berechtigungsträgers mit Vertiefungen und/oder Erhebungen versehen ist, wobei Berechtigungsträger unterschiedlichen Berechtigungsprofils andere Arten von Erhebungen und/oder Vertiefungen umfassen oder gänzlich ohne Erhebungen und/oder Vertiefungen auskommen.

Günstig ist es, wenn die Kennzeichnung mindestens eines Berechtigungsträgers räumlich und/oder zeitlich unveränderlich ist, um die Kennzeichnung auf technisch einfache Weise zu erzielen.

Insbesondere bei einer visuell wahrnehmbaren Kennzeichnung und/oder bei einer haptisch wahrnehmbaren Kennzeichnung ist es günstig, wenn die Kennzeichnung räumlich gleichmäßig ist und sich beispielsweise gleichmäßig und einheitlich über die Oberfläche des Berechtigungsträgers erstreckt.

Wie eingangs erwähnt, kann die Zugriffsberechtigung jedes Berechtigungsträgers von der Erfassungseinheit der Reinigungsvorrichtung erfasst werden. Günstig ist es, wenn die zwei oder mehr Berechtigungsträger Transponder mit jeweils einem Speicherglied für die Zugriffsberechtigung sind und wenn die Zugriffsberechtigung mittels der Erfassungseinheit jeweils berührungslos erfassbar ist. Dies erlaubt eine benutzerfreundliche berührungslose Zugriffskontrolle, so dass eine mechanische Erfassung der Zugriffsberechtigung, insbesondere anhand eines Schlüssels, entfallen kann. Die Reinigungsvorrichtung und die Berechtigungsträger können dabei mittels RFID-Technologie zusammenwirken, wobei die Erfassungseinheit vorzugsweise als aktives RFID-Lesegerät ausgestaltet ist. Die Berechtigungsträger können jeweils passive RFID-Transponder sein. Insbesondere bei der Ausgestaltung der Berechtigungsträger als Transponder ist die anhand des Sinnesorgans wahrnehmbare Kennzeichnung von besonderem Vorteil, weil die auf dem jeweiligen Berechtigungsträger hinterlegte Zugriffsberechtigung im Speicherglied hinterlegt ist. Das Speicherglied ist von der Bedienperson nicht ohne Zuhilfenahme technischer Einrichtungen auslesbar.

Von Vorteil ist es, dass die Reinigungsvorrichtung eine Wiedergabeeinrichtung umfasst zum Bereitstellen einer von der Bedienperson anhand eines Sinnesorgans wahrnehmbaren Berechtigungsinformation, die dem Berechtigungsprofil eines von der Bedienperson zum Zugriff auf die Reinigungsvorrichtung eingesetzten Berechtigungsträgers zugeordnet ist. Anhand der Berechtigungsinformation, die von der Bedienperson ebenfalls benutzerfreundlich mittels eines Sinnesorgans wahrgenommen werden kann, ist eine Kontrollmöglichkeit für die Bedienperson gegeben. Die Berechtigungsinformation erlaubt der Bedienperson festzustellen, ob das Berechtigungsprofil des von ihr eingesetzten Berechtigungsträgers das von ihr erwartete Berechtigungsprofil ist, oder ob möglicherweise eine Fehlkennzeichnung des Berechtigungsträgers oder ein Irrtum der Bedienperson über die Kennzeichnung desselben vorliegt.

Zum benutzerfreundlichen Umgang mit den Berechtigungsträgern und der Reinigungsvorrichtung ist es günstig, wenn von der Berechtigungsinformation der Wiedergabeeinrichtung und der Kennzeichnung der Kennzeichnungseinrichtung dasselbe Sinnesorgan ansprechbar ist.

In der Praxis erweist es sich als günstig, dass die Wiedergabeeinrichtung eine optische Anzeigeeinheit zum Bereitstellen einer visuell wahrnehmbaren Berechtigungsinformation umfasst. Die Berechtigungsinformation kann von der Bedienperson dadurch mittels des Sehsinns auf einfache Weise wahrgenommen werden. Der Einsatz einer Anzeigeeinheit ermöglicht eine konstruktiv einfache Ausgestaltung der Wiedergabeeinrichtung. Hierfür kann insbesondere eine an der Reinigungsvorrichtung bereits vorhandene, Statusinformationen der Reinigungsvorrichtung anzeigende Anzeigeeinheit eingesetzt werden.

Vorzugsweise ist im Falle einer Kennzeichnung des Berechtigungsprofils des Berechtigungsträgers anhand einer Farbe die Berechtigungsinformation eine Anzeigefarbe der Anzeigeeinheit, wobei es sich bei der Anzeigefarbe um eine Hintergrundfarbe oder um eine Vordergrundfarbe - etwa eine Textfarbe - der Anzeigeeinheit handeln kann. Die mittels einer Anzeigefarbe bereitgestellte, dem Berechtigungsprofil des Berechtigungsträgers zugeordnete Berechtigungsinformation erweist sich in der Praxis als einfach und zuverlässig wahrnehmbar.

Bei zuletzt genannter Ausführungsform erfolgt die Wahrnehmung der Berechtigungsinformation durch die Bedienperson noch einfacher und zuverlässiger, wenn die Farbe der Kennzeichnung und die Anzeigefarbe übereinstimmen. Insbesondere kann vorgesehen sein, dass bei farblicher Kennzeichnung des Berechtigungsprofils auf jedem Berechtigungsträger die Berechtigungsinformation in jedem Fall eine mit der Kennzeichnungsfarbe übereinstimmende Anzeigefarbe ist.

Eine erfindungsgemäße Reinigungsvorrichtung kann als Bodenreinigungsmaschine ausgestaltet sein, beispielsweise als eine Scheuersaugmaschine oder eine fahrbare Kehrmaschine, beide sowohl als sogenannte "Walk-behind"-Maschinen, bei denen die Bedienperson die Maschinen von der Rückseite steuert, als auch als Aufsitzmaschinen.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine perspektivische Ansicht einer erfindungsgemäßen Reinigungsvorrichtung;
- Figur 2:: eine Draufsicht auf eine Bedieneinheit der Reinigungsvorrichtung aus Figur 1;
- Figur 3:: eine erste Gruppe von drei Berechtigungsträgern unterschiedlichen Berechtigungsprofils, die jeweils Zugriff auf die Reinigungsvorrichtung aus Figur 1 gewähren;
- Figur 4:: eine zweite Gruppe von drei Berechtigungsträgern unterschiedlichen Berechtigungsprofils, die jeweils Zugriff auf die Reinigungsvorrichtung aus Figur 1 gewähren und
- Figur 5:: ein Blockschaltbild elektrisch wirksamer Komponenten der Reinigungsvorrichtung aus Figur 1.

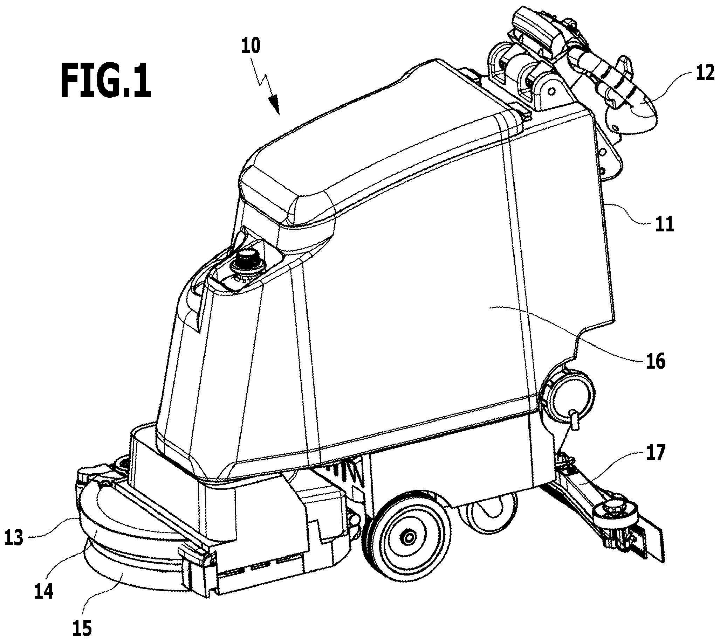

Eine bevorzugte Ausführungsform einer erfindungsgemäßen Reinigungsvorrichtung ist als in Figur 1 perspektivisch dargestellte und darin insgesamt mit dem Bezugszeichen 10 belegte Scheuersaugmaschine ausgestaltet. Bei der Scheuersaugmaschine 10 handelt es sich um eine sogenannte "Walk-behind"-Maschine, die eine Bedienperson von ihrer Rückseite 11 unter Zuhilfenahme einer daran angeordneten Bedieneinheit 12 steuert.

An ihrer Vorderseite 13 weist die Scheuersaugmaschine 10 ein Reinigungswerkzeug 14 auf mit einer rotierenden Tellerbürste 15, mit der Verschmutzungen von einer zu reinigenden Bodenfläche abgelöst werden können. Zur Steigerung der Reinigungswirkung kann die Bodenfläche mit einer in einem Tank 16 der Scheuersaugmaschine 10 enthaltenen Reinigungsflüssigkeit wie Wasser beaufschlagt werden. An der Rückseite 11 umfasst die Scheuersaugmaschine 10 eine Schmutzaufnahmevorrichtung 17 zum Aufsaugen des Gemisches aus abgelöstem Schmutz und Wasser von der Bodenfläche.

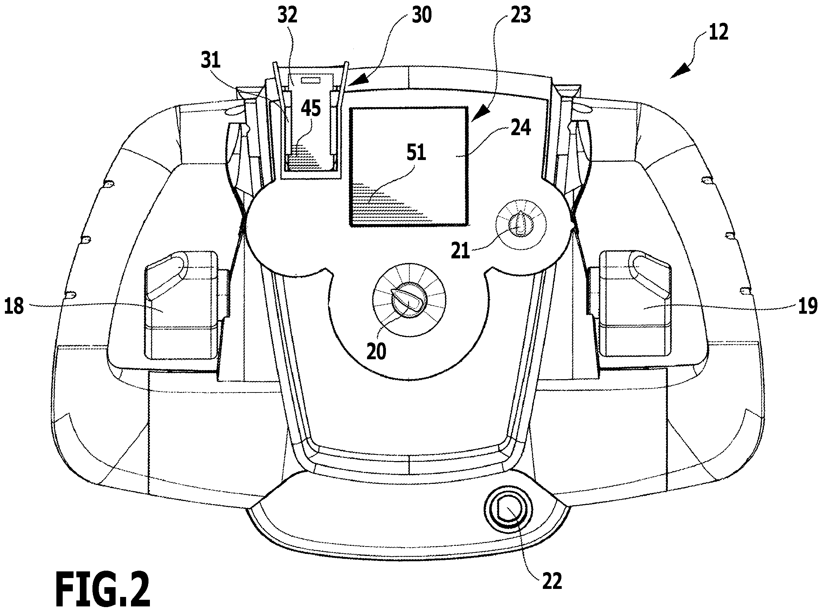

Die in Figur 2 in Draufsicht dargestellte Bedieneinheit 12 umfasst eine Mehrzahl von Bedienelementen 18 bis 22, auf die nachfolgend nicht näher eingegangen wird, zur Entgegennahme von Bedienanweisungen durch eine Bedienperson. Ferner umfasst die Bedieneinheit 12 eine Wiedergabeeinrichtung 23 mit einer optischen Anzeigeeinheit 24, mit der Informationen den Zustand der Scheuersaugmaschine 10 betreffend darstellbar sind. Die Anzeigeeinheit 24 umfasst insbesondere ein Farbdisplay, welches eine Vielzahl von Farben darstellen kann.

Die Bedieneinheit 12 steht mit einer Steuereinheit 25 der Scheuersaugmaschine 10 in Wirkverbindung, die u.a. die Anzeigeeinheit 24 ansteuern und Anweisungen der Bedienperson an den Bedienelementen 18 bis 22 entgegennehmen kann. Weiter ist die Steuereinheit 25 mit einer Speichereinheit 26 elektrisch gekoppelt, auf die nachher noch eingegangen wird.

Außerdem steht die Steuereinheit 25 mit einer Erfassungseinheit 27 in Wirkverbindung. Die Erfassungseinheit 27 ist als RFID-Lesegerät 28 ausgestaltet, das unterhalb einer Abdeckung der Bedieneinheit 12 seitlich neben der Anzeigeeinheit 24 angeordnet ist. Das RFID-Lesegerät 28 ist zum an sich bekannten berührungslosen Erfassen von Zugriffsberechtigungen auf nachfolgend beschriebenen Berechtigungsträgern ausgebildet, die Zugriff auf die Scheuersaugmaschine 10 gewähren.

Ferner ist die Steuereinheit 25 mit einem Schalter 29, beispielsweise einem Mikroschalter, elektrisch gekoppelt. Der Schalter 29 ist an einer Aufnahme 30 in Form eines Einschubschachtes 31 angeordnet (in Figur 2 nicht gezeigt). Die Aufnahme 30 befindet sich seitlich neben der Anzeigeeinheit 24 und oberhalb der Erfassungseinheit 27.

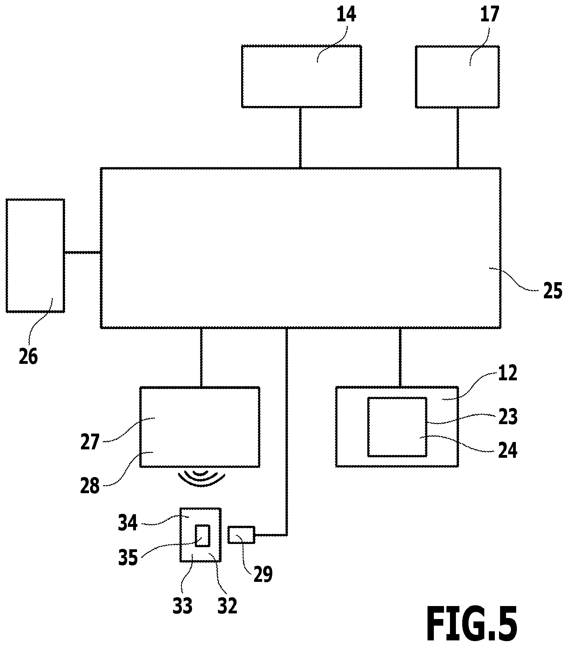

Im Einschubschacht 31 können verschiedene Berechtigungsträger entfernbar angeordnet werden, beispielsweise der in Figur 2 dargestellte und in Figur 5 schematisch dargestellte Berechtigungsträger 32. Der Berechtigungsträger 32 ist ausgestaltet in Form einer Berechtigungskarte 33 im Scheckkartenformat. Insbesondere ist der Berechtigungsträger 32 ein Transponder 34 mit einem per RFID-Technologie auslesbaren Speicherglied 35.

Im Speicherglied 35 ist eine Zugriffsberechtigung gespeichert, die einen Zugriff auf die Funktionen der Steuersaugmaschine 10 gewährt. Um Zugriff zu erlangen, muss die Bedienperson den Berechtigungsträger 32 im Einschubschacht 31 platzieren, wodurch der Schalter 29 betätigt wird. Daraufhin aktiviert die Steuereinheit 25 die Erfassungseinheit 27, die mittels RFID-Technologie die Zugriffsberechtigung aus dem Speicherglied 35 ausliest. Die Zugriffsberechtigung wird an die Speichereinheit 26 übermittelt.

In der Speichereinheit 26 wird die Zugriffsberechtigung hinsichtlich ihrer Gültigkeit geprüft. Außerdem wird ein mit der Zugriffsberechtigung verknüpftes Berechtigungsprofil aus der Speichereinheit 26, in der es hinterlegt ist, ausgelesen. Der Berechtigungsträger 32 weist das Berechtigungsprofil auf, das in Zusammenhang mit der im Speicherglied 35 hinterlegten Zugriffsberechtigung steht. Es kann alternativ vorgesehen sein, dass im Speicherglied 35 über die Zugriffsberechtigung hinaus auch das Berechtigungsprofil des Berechtigungsträgers 32 gespeichert ist und von der Erfassungseinheit 27 mit ausgelesen werden kann. Möglich ist auch, dass das Berechtigungsprofil ein Bestandteil der Zugriffsberechtigung ist.

Im Berechtigungsprofil des Berechtigungsträgers 32 ist gespeichert, auf welche der insgesamt zur Verfügung stehenden Funktionen der Scheuersaugmaschine 10 die den Berechtigungsträger 32 innehabende Bedienperson zugreifen kann. Beispielsweise kann vorgesehen sein, dass im Berechtigungsprofil gespeichert ist, dass die Bedienperson nur ausgewählte Funktionseinheiten der Scheuersaugmaschine 10 wie z.B. das Reinigungswerkzeug 14 und die Schmutzaufnahmevorrichtung 17, die ebenfalls von der Steuereinheit 25 ansteuerbar sind, einsetzen kann. Denkbar ist auch, dass die Bedienperson Funktionseinheiten wie das Reinigungswerkzeug 14 und die Schmutzaufnahmevorrichtung 17 mit aktuellen Reinigungsparametern verwenden kann, diese Reinigungsparameter aber nicht verändern kann. Möglich ist auch, dass im Berechtigungsprofil gespeichert ist, ob die Bedienperson befugt ist, Softwareaktualisierungen über eine in der Zeichnung nicht dargestellte Schnittstelle auf die Steuereinheit 25 zu übertragen.

Das Vorsehen eines mit der Zugriffsberechtigung verknüpften Berechtigungsprofils erlaubt es, Bedienpersonen beispielsweise je nach Aufgabenbereich, Kenntnisstand sowie Erfahrung im Umgang mit der Scheuersaugmaschine 10 das Ausführen unterschiedlicher Funktionen der Scheuersaugmaschine 10 zu ermöglichen. Zu diesem Zweck umfasst die Scheuersaugmaschine 10 eine Gruppe von drei Berechtigungsträgern, die über den bereits erwähnten Berechtigungsträger 32 hinaus zwei weitere Berechtigungsträger 36 und 37 umfasst.

In technischer Hinsicht sind alle Berechtigungsträger 32, 36 und 37 identisch ausgestaltet, nämlich als Berechtigungskarten 33, 38 bzw. 39, insbesondere als Transponder 34, 40 bzw. 41. Auch die Berechtigungsträger 36 und 37 umfassen identisch zum Speicherglied 35 ausgebildete Speicherglieder, auf denen jeweils Zugriffsberechtigungen hinterlegt sind (nicht gezeigt). Diesen Zugriffsberechtigungen ist jeweils ein Berechtigungsprofil der Berechtigungsträger 36 und 37 zugeordnet.

Die Berechtigungsträger 32, 36 und 37 unterscheiden sich hinsichtlich ihrer Berechtigungsprofile dadurch, dass der Berechtigungsträger 36 für nur "normal erfahrene" Bedienpersonen vorgesehen ist und nur Zugriff auf elementare Grundfunktionen der Scheuersaugmaschine 10 gewährt. Der Berechtigungsträger 32 ist für erfahrenere Bedienpersonen vorgesehen, mit dessen Berechtigungsprofil auf alle gängigen Funktionen der Scheuersaugmaschine 10 zugegriffen werden kann. Der Berechtigungsträger 37 ist Wartungspersonal vorbehalten. Mit seinem Berechtigungsprofil kann auf sämtliche Funktionen der Scheuersaugmaschine 10 zugegriffen werden.

Damit eine Bedienperson erkennen kann, welches Berechtigungsprofil der jeweilige Berechtigungsträger 32, 36 und 37 aufweist, umfassen alle Berechtigungsträger 32, 36 und 37 Kennzeichnungseinrichtungen 42, 43 bzw. 44 gleicher Art. Mittels der Kennzeichnungseinrichtungen 42 bis 44 werden der Bedienperson Kennzeichnungen 45, 46 bzw. 47 bereitgestellt, die von der Bedienperson mittels eines Sinnesorgans zuverlässig und auf benutzerfreundliche Weise wahrgenommen werden können und dem jeweiligen Berechtigungsprofil der Berechtigungsträger 32, 36 bzw. 37 zugeordnet sind.

Alle Kennzeichnungseinrichtungen 42 bis 44 sind optische Kennzeichnungseinrichtungen, deren Kennzeichnungen 45 bis 47 durch den Sehsinn einer Bedienperson visuell wahrnehmbar sind. Die Kennzeichnungen 45 bis 47 sind insbesondere Farbkennzeichnungen, die darin bestehen, dass die Berechtigungsträger 32, 36 bzw. 37 eingefärbt sind, d.h. die Kennzeichnungen 45 bis 47 bestehen jeweils in auf Oberflächen 48, 49 bzw. 50 der Berechtigungsträger 32, 36 bzw. 37 aufgetragener Farbe. Die Kennzeichnungseinrichtungen 42 bis 44 werden gebildet durch die Oberflächen 48 bis 50 mit den sich darauf befindenden, den jeweiligen Farbeindruck hervorrufenden Farbschichten.

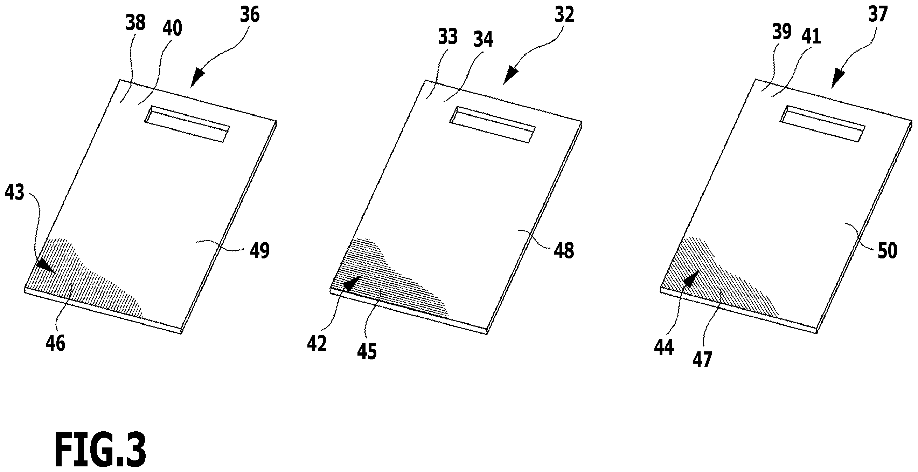

Die farblichen Kennzeichnungen 45 bis 47, in Figur 3 schematisch dargestellt durch unterschiedliche Schraffuren, erstrecken sich jeweils über die kompletten Oberfilächen 48, 49 bzw. 50. Dadurch können sie von der Bedienperson auf besonders einfache Weise visuell unabhängig davon wahrgenommen werden, wie der jeweilige Berechtigungsträger 32, 36 bzw. 37 betrachtet wird. Gewissermaßen bilden die Oberflächen 48 bis 50 Kennzeichnungsbereiche der Kennzeichnungseinrichtungen 42 bis 44.

Beispielsweise besteht die Kennzeichnung 45 im vorliegenden Fall in einer gelben Farbe, die Kennzeichnung 46 in einer roten Farbe und die Kennzeichnung 47 in einer grauen Farbe. "Farbe" kann vorliegend sowohl allgemein eine Grundfarbe bedeuten als auch einen bestimmten Farbton, beispielsweise im "Pantone"-Farbsystem.

Durch die visuell auf einfache Weise wahrnehmbare farbliche Kennzeichnung können die Berechtigungsträger 32, 36 und 37 von der Bedienperson auseinander gehalten werden, was deren Handhabung und damit die Handhabung der Scheuersaugmaschine 10 insgesamt vereinfacht.

Sind zwei oder mehr Berechtigungsträger desselben Berechtigungsprofils vorgesehen, weisen sie, auch bei unterschiedlicher Zugriffsberechtigung, vorzugsweise dieselbe Kennzeichnung auf. Dadurch besteht eine eineindeutige Zuordnung des Berechtigungsprofils zur Kennzeichnung, was den Umgang mit den Berechtigungsträgern der Scheuersaugmaschine 10 weiter vereinfacht.

Ist der Steuereinheit 25 das Berechtigungsprofil des jeweiligen Berechtigungsträgers 32, 36 oder 37 bekannt, steuert sie die Anzeigeeinheit 24 dahingehend an, eine Berechtigungsinformation bereitzustellen, die mit dem Berechtigungsprofil des eingesetzten Berechtigungsträgers verknüpft ist. Die Berechtigungsinformation, in Figur 2 beispielhaft anhand einer durch eine Schraffur symbolisierte Berechtigungsinformation 51 dargestellt, besteht vorliegend in einer Anzeigefarbe der Anzeigeeinheit 24, welche mit der Farbe der jeweiligen Kennzeichnung 45 bis 47 übereinstimmt. Bei der Berechtigungsinformation 51 handelt es sich demnach um eine gelbe Anzeigefarbe der Anzeigeeinheit 24, in Übereinstimmung mit der gelben Kennzeichnung 45 des Berechtigungsträgers 32. "Anzeigefarbe" kann vorliegend die Hintergrundfarbe der Anzeigeeinheit 24 sein oder deren Vordergrundfarbe, z.B. für einen Text, der auf der Anzeigeeinheit 24 ausgegeben wird. In entsprechender Weise ist die Anzeigeeinheit 24 unter Einsatz der Berechtigungsträger 36 und 37 rot bzw. grau, in Übereinstimmung mit den Kennzeichnungen 46 bzw. 47.

Die Berechtigungsinformation ist von der Bedienperson ebenfalls visuell zuverlässig und einfach wahrnehmbar. Sie hat beispielsweise den Zweck festzustellen, ob der jeweils eingesetzte Berechtigungsträger korrekt gekennzeichnet ist. Weicht die Anzeigefarbe von der Farbe der jeweiligen Kennzeichnung des Berechtigungsträgers ab, liegt eine Fehlkennzeichnung des Berechtigungsträgers vor. Die Bedienperson kann daraufhin eine Korrektur der Kennzeichnung vornehmen lassen.

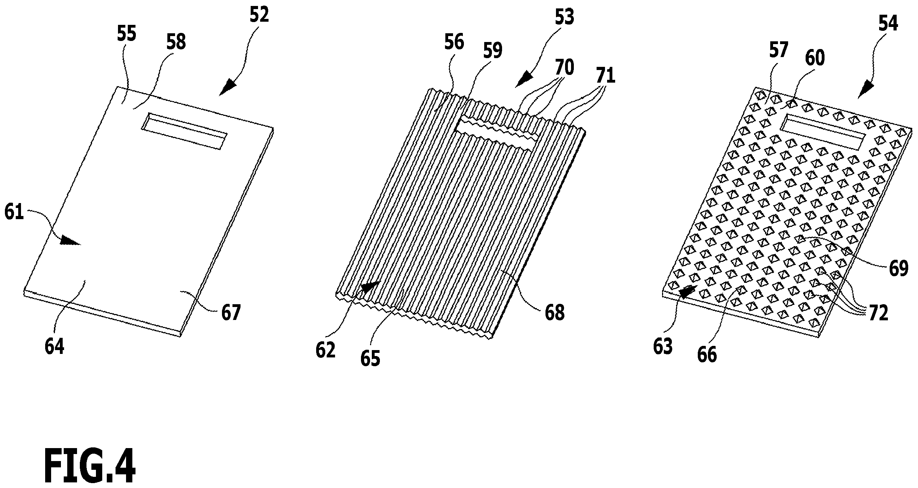

Anstelle der Berechtigungsträger 32, 36 und 37 kann bei der Scheuersaugmaschine auch eine zweite Gruppe von Berechtigungsträgern 52, 53 und 54 zum Einsatz kommen (Figur 4). In technischer Hinsicht sind die Berechtigungsträger 52 bis 54 allesamt identisch ausgebildet, sie sind jeweils Berechtigungskarten 55, 56 bzw. 57 und insbesondere Transponder 58, 59 bzw. 60. Der Berechtigungsträger 52 ist für "normal erfahrene" Bedienpersonen vorgesehen, der Berechtigungsträger 53 für erfahrenere Bedienpersonen, und der Berechtigungsträger 54 ist Wartungspersonal vorbehalten.

Jeder der Berechtigungsträger 52 bis 54 umfasst eine Kennzeichnungseinrichtung 61, 62 bzw. 63, bei denen es sich vorliegend um haptische Kennzeichnungseinrichtungen 61 bis 63 handelt. Die Kennzeichnungseinrichtungen 61 bis 63 weisen daher dem Berechtigungsprofil des jeweiligen Berechtigungsträgers 52 bis 54 zugeordnete, durch den Tastsinn der Bedienperson erfassbare Kennzeichnungen 64, 65 bzw. 66 auf. Die Kennzeichnungseinrichtungen 61 bis 63 werden gebildet durch Oberflächen 67, 68 und 69 der Berechtigungsträger 52, 53 bzw. 54, gegebenenfalls mit sich darauf befindenden, jeweils einen ertastbaren Eindruck hervorrufenden Erhebungen und/oder Vertiefungen in bestimmter räumlicher Anordnung.

Alle Kennzeichnungen 64 bis 66 erstrecken sich jeweils über die kompletten Oberflächen 67, 68 und 69. Dadurch können sie von der Bedienperson jeweils mittels des Tastsinns zuverlässig, einfach und benutzerfreundlich wahrgenommen werden. Dies ermöglicht der Bedienperson auch im Fall der Berechtigungsträger 52 bis 54, deren Berechtigungsprofile auf einfache Weise zu erfassen.

Die Kennzeichnung 64 besteht in einer glatten Ausgestaltung der Oberfläche 67, gänzlich ohne Vertiefungen und/oder Erhebungen. Demgegenüber besteht die Kennzeichnung 65 in einander abwechselnden rippenförmigen Erhebungen 70, die voneinander durch nutförmige Vertiefungen 71 getrennt sind. Die Erhebungen 70 und die Vertiefungen 71 verlaufen jeweils in Längsrichtung des Berechtigungsträgers 53. Die Kennzeichnung 66 besteht in einer Vielzahl von identischen, gleichmäßig über die Oberfläche 69 schachbrettartig verteilten pyramidalen Erhebungen 72.

Bei weiteren Gruppen von Berechtigungsträgern, die in der Scheuersaugmaschine 10 zum Einsatz kommen können, können akustische, olfaktorische oder gustatorische Kennzeichnungseinrichtungen vorgesehen sein, die den Hörsinn, den Geruchssinn oder den Geschmackssinn einer Bedienperson ansprechen. Es kann auch vorgesehen sein, dass innerhalb einer Gruppe von Berechtigungsträgern Kennzeichnungseinrichtungen zum Einsatz kommen, welche unterschiedliche Sinnesorgane einer Bedienperson ansprechen. Beispielsweise können optische und haptische Kennzeichnungseinrichtungen gemischt miteinander vorkommen.

Möglich ist auch eine Mehrfachkennzeichnung eines Berechtigungsträgers. Beispielsweise könnte bei den Berechtigungsträgern 52 bis 54 zusätzlich eine farbliche Kennzeichnung vorgesehen sein. Dadurch würde eine Redundanz an kennzeichnender Information geschaffen, welche die Zuverlässigkeit der Wahrnehmung des mit dem jeweiligen Berechtigungsträger verknüpften Berechtigungsprofils durch eine Bedienperson erhöhen kann.

## Patentansprüche

1. Reinigungsvorrichtung, zum Zugriff auf welche eine auf einem Berechtigungsträger (32, 36, 37; 52, 53, 54) hinterlegte Zugriffsberechtigung erforderlich ist, umfassend zwei oder mehr Berechtigungsträger (32, 36, 37; 52, 53, 54) mit darauf hinterlegten Zugriffsberechtigungen, die mit unterschiedlichen Berechtigungsprofilen verknüpft sind, sowie eine Erfassungseinheit (27) zum Erfassen der Zugriffsberechtigung eines Berechtigungsträgers (32, 36, 37; 52, 53, 54), wobei einer Bedienperson von der Reinigungsvorrichtung (10) ein vom mit der Zugriffsberechtigung verknüpften Berechtigungsprofil abhängiger Funktionsumfang bereitstellbar ist, wobei jeder Berechtigungsträger (32, 36, 37; 52, 53, 54) eine Kennzeichnungseinrichtung (42, 43, 44; 61, 62, 63) umfasst zum Bereitstellen einer dem jeweiligen Berechtigungsprofil des Berechtigungsträgers (32, 36, 37; 52, 53, 54) zugeordneten und von der Bedienperson anhand eines Sinnesorgans wahrnehmbaren Kennzeichnung (45, 46, 47; 64, 65, 66), wobei sich unterschiedlichen Berechtigungsprofilen zugeordnete Kennzeichnungen (45, 46, 47; 64, 65, 66) voneinander unterscheiden, **dadurch gekennzeichnet, dass** die Reinigungsvorrichtung (10) eine Wiedergabeeinrichtung (23) mit einer ansteuerbaren optischen Anzeigeeinheit (24) umfasst zum Bereitstellen einer von der Bedienperson visuell wahrnehmbaren Berechtigungsinformation (51), die dem Berechtigungsprofil eines von der Bedienperson zum Zugriff auf die Reinigungsvorrichtung (10) eingesetzten Berechtigungsträgers (32, 36, 37; 52, 53, 54) zugeordnet ist, für eine Kontrollmöglichkeit für die Bedienperson, festzustellen, ob das Berechtigungsprofil eines eingesetzten Berechtigungsträgers (32, 36, 37; 52, 53, 54) das von der Bedienperson erwartete Berechtigungsprofil ist.

2. Reinigungsvorrichtung nach Anspruch 1, **dadurch gekennzeichnet, dass** die Kennzeichnungen (45, 46, 47; 64, 65, 66) aller Berechtigungsträger (32, 36, 37; 52, 53, 54) anhand desselben Sinnesorgans wahrnehmbar sind.

3. Reinigungsvorrichtung nach einem der voranstehenden Ansprüche, **dadurch gekennzeichnet, dass** mindestens eine Kennzeichnungseinrichtung (42, 43, 44) eine optische Kennzeichnungseinrichtung (42, 43, 44) mit visuell wahrnehmbarer Kennzeichnung (45, 46, 47) ist.

4. Reinigungsvorrichtung nach Anspruch 3, **dadurch gekennzeichnet, dass** die visuell wahrnehmbare Kennzeichnung (45, 46, 47) eine Farbe ist.

5. Reinigungsvorrichtung nach einem der voranstehenden Ansprüche, **dadurch gekennzeichnet, dass** mindestens eine Kennzeichnungseinrichtung (61, 62, 63) eine haptische Kennzeichnungseinrichtung (61, 62, 63) mit tastend wahrnehmbarer Kennzeichnung (64, 65, 66) ist.

6. Reinigungsvorrichtung nach Anspruch 5, **dadurch gekennzeichnet, dass** die tastend wahrnehmbare Kennzeichnung (64, 65, 66) am Berechtigungsträger (53, 54) gebildete Erhebungen (70, 72) und/oder Vertiefungen (71) umfasst.

7. Reinigungsvorrichtung nach einem der voranstehenden Ansprüche, **dadurch gekennzeichnet, dass** die mindestens eine Kennzeichnungseinrichtung (42, 43, 44; 61, 62, 63) eine statische Kennzeichnungseinrichtung (42, 43, 44; 61, 62, 63) mit dauerhaft wahrnehmbarer Kennzeichnung (45, 46, 47; 64, 65, 66) ist.

8. Reinigungsvorrichtung nach einem der voranstehenden Ansprüche, **dadurch gekennzeichnet, dass** die Kennzeichnung (45, 46, 47; 64, 65, 66) mindestens eines Berechtigungsträgers (32, 36, 37; 52, 53, 54) an einer Oberfläche (48, 49, 50; 67, 68, 69) des Berechtigungsträgers (32, 36, 37; 52, 53, 54) angeordnet ist.

9. Reinigungsvorrichtung nach Anspruch 8, **dadurch gekennzeichnet, dass** sich die Kennzeichnung (45, 46, 47; 64, 65, 66) über die gesamte Oberfläche (48, 49, 50; 67, 68, 69) des Berechtigungsträgers (32, 36, 37; 52, 53, 54) erstreckt.

10. Reinigungsvorrichtung nach einem der voranstehenden Ansprüche, **dadurch gekennzeichnet, dass** die Kennzeichnung (45, 46, 47; 64, 65, 66) mindestens eines Berechtigungsträgers (32, 36, 37; 52, 53, 54) räumlich und/oder zeitlich unveränderlich ist.

11. Reinigungsvorrichtung nach einem der voranstehenden Ansprüche, **dadurch gekennzeichnet, dass** die Berechtigungsträger (32, 36, 37; 52, 53, 54) Transponder (34, 40, 41; 58, 59, 60) mit jeweils einem Speicherglied (35) für die Zugriffsberechtigung sind und dass die Zugriffsberechtigung mittels der Erfassungseinheit (27) jeweils berührungslos erfassbar ist.

12. Reinigungsvorrichtung nach einem der voranstehenden Ansprüche, **dadurch gekennzeichnet, dass** im Falle einer Kennzeichnung des Berechtigungsprofils des Berechtigungsträgers (32, 36, 37) anhand einer Farbe die Berechtigungsinformation (51) eine Anzeigefarbe der Anzeigeeinheit (24) ist.

13. Reinigungsvorrichtung nach Anspruch 12, **dadurch gekennzeichnet, dass** die Farbe der Kennzeichnung (45, 46, 47) und die Anzeigefarbe übereinstimmen.

14. Reinigungsvorrichtung nach einem der voranstehenden Ansprüche, **dadurch gekennzeichnet, dass** die Reinigungsvorrichtung (10) mehrere Berechtigungsträger (32, 36, 37; 52, 53, 54) mit demselben Berechtigungsprofil umfasst, wobei die mehreren Berechtigungsträger (32, 36, 37; 52, 53, 54) identische Kennzeichnungen (45, 46, 47; 64, 65, 66) aufweisen.

## Claims

1. Cleaning appliance, wherein in order to access same, an access authorization stored on an authorization carrier (32, 36, 37; 52, 53, 54) is required, the appliance comprising two or more authorization carriers (32, 36, 37; 52, 53, 54) with access authorizations stored thereon which are linked to different authorization profiles, and a detection unit (27) for detecting the access authorization of an authorization carrier (32, 36, 37; 52, 53, 54), wherein a range of functions dependent on the authorization profile linked to the access authorization can be provided to an operator by the cleaning appliance (10), wherein each authorization carrier (32, 36, 37; 52, 53, 54) comprises an identification device (42, 43, 44; 61, 62, 63) for providing an identifier (45, 46, 47; 64, 65, 66) which is associated with the particular authorization profile of the authorization carrier (32, 36, 37; 52, 53, 54) and which is perceivable by the operator using a sensory organ, wherein identifiers (45, 46, 47; 64, 65, 66) associated with different authorization profiles are different from one another, **characterized in that** the cleaning appliance (10) includes a playback device (23) with a controllable optical display unit (24) for providing an authorization information (51) that is visually perceivable by the operator, which authorization information is associated with the authorization profile of an authorization carrier (32, 36, 37; 52, 53, 54) used by the operator for accessing the cleaning appliance (10), for a control option for the operator to determine whether the authorization profile of an authorization carrier (32, 36, 37; 52, 53, 54) being used is the authorization profile expected by the operator.

2. Cleaning appliance according to Claim 1, **characterized in that** the identifiers (45, 46, 47; 64, 65, 66) of all authorization carriers (32, 36, 37; 52, 53, 54) are perceivable using the same sensory organ.

3. Cleaning appliance according to one of the preceding claims, **characterized in that** at least one identification device (42, 43, 44) is an optical identification device (42, 43, 44) having a visually perceivable identifier (45, 46, 47).

4. Cleaning appliance according to Claim 3, **characterized in that** the visually perceivable identifier (45, 46, 47) is a color.

5. Cleaning appliance according to one of the preceding claims, **characterized in that** at least one identification device (61, 62, 63) is a haptic identification device (61, 62, 63) having an identifier (64, 65, 66) which is perceivable by touch.

6. Cleaning appliance according to Claim 5, **characterized in that** the identifier (64, 65, 66) which is perceivable by touch comprises elevations (70, 72) and/or depressions (71) which are formed on the authorization carrier (53, 54).

7. Cleaning appliance according to one of the preceding claims, **characterized in that** the at least one identification device (42, 43, 44; 61, 62, 63) is a static identification device (42, 43, 44; 61, 62, 63) having an always perceivable identifier (45, 46, 47; 64, 65, 66).

8. Cleaning appliance according to one of the preceding claims, **characterized in that** the identifier (45, 46, 47; 64, 65, 66) of at least one authorization carrier (32, 36, 37; 52, 53, 54) is situated on a surface (48, 49, 50; 67, 68, 69) of the authorization carrier (32, 36, 37; 52, 53, 54).

9. Cleaning appliance according to Claim 8, **characterized in that** the identifier (45, 46, 47; 64, 65, 66) extends over the entire surface (48, 49, 50; 67, 68, 69) of the authorization carrier (32, 36, 37; 52, 53, 54).

10. Cleaning appliance according to one of the preceding claims, **characterized in that** the identifier (45, 46, 47; 64, 65, 66) of at least one authorization carrier (32, 36, 37; 52, 53, 54) is unchanging with respect to space and/or time.

11. Cleaning appliance according to one of the preceding claims, **characterized in that** the authorization carriers (32, 36, 37; 52, 53, 54) are transponders (34, 40, 41; 58, 59, 60), each having a memory element (35) for the access authorization, and **in that** the access authorization is detectable in each case in a contactless manner by means of the detection unit (27).

12. Cleaning appliance according to one of the preceding claims, **characterized in that** in the case of an identifier of the authorization profile of the authorization carrier (32, 36, 37) based on a color, the authorization information (51) is a display color of the display unit (24).

13. Cleaning appliance according to Claim 12, **characterized in that** the color of the identifier (45, 46, 47) and the display color match.

14. Cleaning appliance according to one of the preceding claims, **characterized in that** the cleaning appliance (10) comprises a plurality of authorization carriers (32, 36, 37; 52, 53, 54) having the same authorization profile, wherein the plurality of authorization carriers (32, 36, 37; 52, 53, 54) have identical identifiers (45, 46, 47; 64, 65, 66).

## Revendications

1. Appareil de nettoyage, pour l'accès auquel il est nécessaire de disposer d'une autorisation d'accès enregistrée sur un support d'autorisation (32, 36, 37; 52, 53, 54), comprenant deux supports d'autorisation (32, 36, 37; 52, 53, 54) ou davantage, sur lesquels sont enregistrées des autorisations d'accès, qui sont liées à des profils d'autorisation différents, ainsi qu'une unité d'acquisition (27) pour l'acquisition de l'autorisation d'accès d'un support d'autorisation (32, 36, 37; 52, 53, 54), appareil de nettoyage
dans lequel une étendue de fonctionnement, qui dépend du profil d'autorisation lié à l'autorisation d'accès, peut être octroyée à une personne de service par l'appareil de nettoyage (10),
dans lequel chaque support d'autorisation (32, 36, 37; 52, 53, 54) comporte un dispositif de caractérisation (42, 43, 44; 61, 62, 63) pour fournir une caractérisation (45, 46, 47; 64, 65, 66), qui est associée au profil d'autorisation respectif du support d'autorisation (32, 36, 37; 52, 53, 54), et perceptible par la personne de service à l'aide d'un organe des sens, et
dans lequel des caractérisations (45, 46, 47; 64, 65, 66) associées à des profils d'autorisation différents, sont différentes les unes des autres,
**caractérisé en ce que** l'appareil de nettoyage (10) comporte un dispositif de reproduction (23) avec une unité de visualisation optique (24) pouvant être commandée, pour fournir une information d'autorisation (51) perceptible visuellement par la personne de service et associée au profil d'autorisation d'un support d'autorisation (32, 36, 37; 52, 53, 54) employé par la personne de service pour l'accès à l'appareil de nettoyage (10), en vue d'une possibilité de contrôle pour la personne de service, en lui permettant de constater si le profil d'autorisation d'un support d'autorisation (32, 36, 37; 52, 53, 54) employé, est le profil d'autorisation attendu par la personne de service.

2. Appareil de nettoyage selon la revendication 1, **caractérisé en ce que** les caractérisations (45, 46, 47; 64, 65, 66) de tous les supports d'autorisation (32, 36, 37; 52, 53, 54) sont perceptibles à l'aide du même organe des sens.

3. Appareil de nettoyage selon l'une des revendications précédentes, **caractérisé en ce qu'**au moins un dispositif de caractérisation (42, 43, 44) est un dispositif de caractérisation optique (42, 43, 44) comprenant une caractérisation (45, 46, 47) perceptible visuellement.

4. Appareil de nettoyage selon la revendication 3, **caractérisé en ce que** la caractérisation (45, 46, 47) perceptible visuellement est une couleur.

5. Appareil de nettoyage selon l'une des revendications précédentes, **caractérisé en ce qu'**au moins un dispositif de caractérisation (61, 62, 63) est un dispositif de caractérisation haptique (61, 62, 63) comprenant une caractérisation (64, 65, 66) perceptible par le toucher.

6. Appareil de nettoyage selon la revendication 5, **caractérisé en ce que** la caractérisation (64, 65, 66) perceptible par le toucher comprend des proéminences (70, 72) et/ou des creux (71) formés sur le support d'autorisation (53, 54).

7. Appareil de nettoyage selon l'une des revendications précédentes, **caractérisé en ce que** ledit au moins un dispositif de caractérisation (42, 43, 44; 61, 62, 63) est un dispositif de caractérisation (42, 43, 44; 61, 62, 63) statique comprenant une caractérisation (45, 46, 47; 64, 65, 66) perceptible de manière permanente.

8. Appareil de nettoyage selon l'une des revendications précédentes, **caractérisé en ce que** la caractérisation (45, 46, 47; 64, 65, 66) d'au moins un support d'autorisation (32, 36, 37; 52, 53, 54) est agencée sur une surface (48, 49, 50 ; 67, 68, 69) du support d'autorisation (32, 36, 37; 52, 53, 54).

9. Appareil de nettoyage selon la revendication 8, **caractérisé en ce que** la caractérisation (45, 46, 47; 64, 65, 66) s'étend sur la totalité de la surface (48, 49, 50 ; 67, 68, 69) du support d'autorisation (32, 36, 37; 52, 53, 54).

10. Appareil de nettoyage selon l'une des revendications précédentes, **caractérisé en ce que** la caractérisation (45, 46, 47; 64, 65, 66) d'au moins un support d'autorisation (32, 36, 37; 52, 53, 54) est invariable dans l'espace et/ou dans le temps.

11. Appareil de nettoyage selon l'une des revendications précédentes, **caractérisé en ce que** les supports d'autorisation (32, 36, 37; 52, 53, 54) sont des transpondeurs (34, 40, 41; 58, 59, 60) comportant chacun un organe de mémoire (35) pour l'autorisation d'accès, et **en ce que** l'acquisition de l'autorisation d'accès peut être effectuée respectivement sans contact, au moyen de l'unité d'acquisition (27).

12. Appareil de nettoyage selon l'une des revendications précédentes, **caractérisé en ce que** dans le cas d'une caractérisation du profil d'autorisation du support d'autorisation (32, 36, 37) à l'aide d'une couleur, l'information d'autorisation (51) est une couleur de visualisation de l'unité de visualisation (24).

13. Appareil de nettoyage selon la revendication 12, **caractérisé en ce que** la couleur de la caractérisation (45, 46, 47) et la couleur de visualisation sont identiques.

14. Appareil de nettoyage selon l'une des revendications précédentes, **caractérisé en ce que** l'appareil de nettoyage (10) comprend plusieurs supports d'autorisation (32, 36, 37; 52, 53, 54) avec le même profil d'autorisation, lesdits plusieurs supports d'autorisation (32, 36, 37; 52, 53, 54) présentant des caractérisations (45, 46, 47; 64, 65, 66) identiques.
